**Europäisches Patentamt**

**European Patent Office**

**Office européen des brevets**

(19)

(11) Numéro de publication : **0 634 370 A1**

(12)

# DEMANDE DE BREVET EUROPEEN

(21) Numéro de dépôt : **94460024.6**

(22) Date de dépôt : **11.07.94**

(51) Int. Cl.$^6$ : **C02F 3/30**

(30) Priorité : **13.07.93 FR 9308853**

(43) Date de publication de la demande :
**18.01.95 Bulletin 95/03**

(84) Etats contractants désignés :
**DE DK GB SE**

(71) Demandeur : **OTV (OMNIUM de TRAITEMENTS et de VALORISATION)**
**Le Doublon**
**11 avenue Dubonnet**
**F-92407 Courbevoie (FR)**

(72) Inventeur : **Capdeville, Bernard**
**61 rue Bonnat**
**31000 Toulouse (FR)**
Inventeur : **Payraudeau, Michèle**
**1 avenue Marguerite**
**95600 Eaubonne (FR)**

(74) Mandataire : **Vidon, Patrice**
**Cabinet Patrice Vidon**
**Immeuble Germanium**
**80, Avenue des Buttes de Coesmes**
**F-35700 Rennes (FR)**

(54) **Procédé de traitement d'effluents azotés avec des boues comme substrat.**

(57) L'invention concerne un procédé de traitement d'un effluent aqueux incluant une étape de dénitrification biologique consistant à mettre en contact ledit effluent avec une flore bactérienne hétérotrophe en milieu non aéré de façon à permettre la réduction d'au moins une partie des nitrates contenus dans cet effluent en azote gazeux, caractérisé en ce qu'il consiste à mettre en contact, lors de l'étape de dénitrification, ledit effluent chargé en nitrates avec des boues provenant de station d'épuration, de façon telle que le ratio spécifique entre la teneur pondérale de matières en suspension desdites boues et la teneur pondérale dudit effluent en nitrates soit au moins égal à 10.

Fig. 1a

**EP 0 634 370 A1**

L'invention concerne le domaine du traitement des eaux.

Plus précisément, l'invention concerne les processus de dénitrification par voie biologique pouvant être appliqués à tous les effluents aqueux chargés en nitrates ou en ammoniaque, tels que notamment, les eaux usée domestiques et les eaux usées industrielles et un procédé de traitement de boues à partir desquelles peuvent être extraits de tels effluents.

L'élimination de la pollution azotée se présentant sous forme d'ammoniaque est classiquement réalisée par voie biologique, en faisant subir auxdites eaux une étape de nitrification, au cours de laquelle l'azote ammoniacal est transformé en nitrates, suivie d'une étape de dénitrification, au cours de laquelle les nitrates sont réduits en nitrites puis en azote gazeux. Cette transformation peut être réalisée soit dans un réacteur unique en ménageant des temps d'aération et de non aération, soit dans des bassins séparés, l'un fonctionnant en anoxie, l'autre en aérobie. Il est possible de placer le bassin en anoxie en tête des ouvrages. Il faut alors recirculer les nitrates en tête d'installation. Il est également possible de placer le bassin en anoxie en fin de l'installation. Dans ce cas, l'étape de nitrification est effectuée par mise en contact des eaux avec une biomasse constituée de bactéries autotrophes, en milieu aérobie. L'étape de dénitrification est, quant à elle, effectuée en mettant en contact les eaux résultant de l'étape de nitrification, avec une biomasse constituée de bactéries hétérotrophes, en milieu non aéré. C'est à cette seconde étape que se rapporte l'invention.

Pour les effluents renfermant une pollution azotée se présentant uniquement sous forme de nitrates, seule l'étape de dénitrification est nécessaire.

L'étape de dénitrification réalisée grâce à la flore bactérienne hétérotrophe peut être globalisée par la réaction d'oxydoréduction suivante :

$$NO_3^- + 2H^+ + 5e^- -> 1/2\ N_2 + H_2O$$

En fait, différentes étapes interviennent au cours de cette réaction :

$$HNO_3 + 2H^+ + 2e^- -> HNO_2 + H_2O$$
$$HNO_2 + 2H^+ + 2e^- -> 1/2\ H_2N_2O_2 + H_2O$$
$$H_2N_2O_2 + 2H^+ + 2e^- -> N_2 + 2H_2O$$

Ces différentes réactions dépendent de nombreux paramètres et notamment du pH, de la température, de la concentration en oxygène dissous et de la concentration en source carbonée, qui constitue la principale source d'électron du milieu.

Le traitement des nitrates par voie biologique permet une élimination correcte de ces composés. Toutefois, il a été démontré que le rendement de la dénitrification est une fonction croissante de la concentration en source carbonée que l'on peut exprimer par la Demande Chimique en Oxygène du milieu. Si une déficience en donneurs d'électrons survient, c'est-à-dire si le milieu réactionnel est trop pauvre en carbone organique soluble disponible, la réaction de dénitrification est incomplète. Or, dans certains cas de figure, le rapport entre la Demande Chimique en Oxygène présente dans le milieu à traiter et la quantité de nitrates présents dans ce même milieu (rapport DCO/ N.NO$_3$) est insuffisant pour permettre de réduire la totalité des nitrates.

Afin de résoudre ce problème, il a déjà été proposé dans l'état de la technique de palier la carence endogène en carbone du milieu traité par un apport de carbone exogène, au cours de l'étape de dénitrification. Les déchets industriels, souvent riches en carbone et disponibles à bas prix, ont été un champ d'investigation privilégié pour ce type d'application. Ainsi, l'article "Denitrification : efficiencies of alternate carbon sources", Kaplan, D.L., Riley, P.A., Pierce, J., Kaplan, A.M.,(Army Natick Res. Dev. Cent. MA, USA) Report 1984, NATICK divulgue notamment l'utilisation de divers déchets organiques (méthanol, petit lait, macérat de maïs...) pour enrichir en carbone un milieu à dénitrifier. Selon cet article, le méthanol est le composé le plus efficace et permet d'éliminer plus de 95% de la pollution azotée. Toutefois, la toxicité de ce composé et les dangers représentés par son stockage, son coût, ont amené à rechercher d'autres substrats carbonés pouvant être utilisés à cette fin et, entre autre, à tenter d'utiliser les boues provenant des stations d'épuration dans ce but.

En France, la quantité de boues produite par les stations d'épuration est d'environ un million de tonnes de matières sèches par an. Environ la moitié de ces boues est valorisée dans le domaine agricole tandis que 35 % sont stockés dans les décharges. La production de ces boues étant de plus en plus importante, il est de plus en plus nécessaire que celles-ci présentent un minimum de danger pour l'environnement et la santé humaine. C'est la raison pour laquelle, une grande partie des boues produites par les stations d'épuration subissent un traitement préalable qui peut constituer notamment en :

- une stabilisation à la chaux.
- une digestion anaérobie,
- une stabilisation aérobie,
- une déshydratation,
- un compostage,
- une incinération.

De nombreuses voies de recherches sont consacrées à trouver de nouvelles voies de valorisation de telles boues.

Dans le cadre de la recherche de nouvelles sources carbonées pouvant être utilisées en tant que substrats carbonés dans les processus de dénitrification par voie biologique, on a donc déjà tenté, d'utiliser les boues provenant des stations d'épuration. L'article "Denitrification : efficiencies of alternate carbon sources" déjà cité souligne que les boues provenant des station d'épuration constitue un substrat peu utilisable dans ce but. La raison invoquée consiste dans le fait que la matière organique présente dans de telles boues s'y trouve sous forme particulaire la rendant, pour une bonne partie, difficilement utilisable par la flore hétérotrophe chargée de la dénitrification ; de plus, en général, le rapport DCO/N est tel, que la quantité de carbone récupérable est trop faible.

Il a donc été proposé d'hydrolyser préalablement les boues provenant de stations d'épuration pour en tirer le meilleur parti puis de leur faire subir une étape de séparation des boues et de l'hydrolysat ainsi formés, afin d'utiliser ce dernier en tant que supplément carboné dans un processus de dénitrification. Cependant, ce traitement préalable des boues implique la réalisation d'ouvrages de grandes dimensions permettant d'effectuer l'hydrolyse des boues et conduit donc à une augmentation notable du coût de l'étape de dénitrification. Un tel procédé est apparu comme économiquement inacceptable.

L'objectif de la présente invention est de permettre l'utilisation des boues provenant de stations d'épuration comme source carbonée utilisable lors d'une étape de dénitrification biologique d'effluents aqueux ou de boues, sans avoir besoin d'hydrolyser de telles boues dans un réacteur spécifique.

Un autre objectif de l'invention est de fournir un tel procédé pouvant être appliqué au traitement de tout type d'eaux nitratées mais aussi au traitement des filtrats provenant du traitement des boues résultant d'étapes de traitement divers d'effluents aqueux...

Alors que l'état de la technique enseignait qu'une telle utilisation des boues était impossible à moins de procéder préalablement à leur hydrolyse, la Demanderesse a constaté que, de façon surprenante, de telles boues pouvaient être utilisées à cette fin, à condition de compenser un manque de carbone facilement utilisable par les microorganismes par un ratio MES/N.NO$_3$ élevé.

L'invention concerne un procédé de traitement d'un effluent aqueux incluant une étape de dénitrification biologique consistant à mettre en contact ledit effluent avec une flore bactérienne hétérotrophe en milieu non aéré de façon à permettre la réduction d'au moins une partie des nitrates contenus dans cet effluent en azote gazeux, caractérisé en ce qu'il consiste à mettre en contact, lors de l'étape de dénitrification, ledit effluent chargé en nitrates avec des boues provenant de station d'épuration de façon telle que le ratio spécifique entre la teneur pondérale de matières en suspension desdites boues et la teneur pondérale dudit effluent en nitrates soit au moins égal à 10.

L'invention peut donc être mise en oeuvre chaque fois que l'on dispose d'une part d'azote à éliminer et d'autre part de boues dans le rapport qui convient.

Si l'azote présent dans l'eau interstitielle des boues n'est pas sous forme de nitrates mais d'ammoniaque, il doit être procédé à une étape préalable de nitrification.

Ainsi, l'invention permet de valoriser des boues riches en matières organiques, et donc fermentescibles, en les utilisant, telles quelles (sans pré-traitement) comme substrat carboné d'une flore hétérotrophe de dénitrification. L'apport de l'effluent contenant les nitrates rend ces boues plus stables et donc moins susceptibles de fermenter et de créer des mauvaises odeurs résultant de cette fermentation. L'apport de nitrates permet l'oxydation de la matière organique contenue dans les boues et donc une réduction de cette dernière.

Il se produit donc une synergie de traitement entre les boues et l'effluent, l'effluent nitraté permettant de stabiliser les boues et les boues autorisant une amélioration du rendement de dénitrification.

Les boues provenant de stations d'épuration utilisables dans le cadre du procédé selon l'invention peuvent avoir subi différents traitements. Selon l'origine des boues et le traitement qu'elles auront subi, la matière organique disponible dans ces boues sera plus ou moins importante. Afin d'obtenir un ratio DCO/N.NO$^3$ suffisant, les quantités de boues devant être mises en contact avec les effluents pour permettre la réduction de la totalité ou de la quasi-totalité des nitrates pourront donc varier considérablement.

Les boues de station d'épuration pourront notamment ainsi être constituées:

- de boues primaires (riches en matières organiques et contenant des concentrations d'ammoniaque proches de celles de l'eau brute) et obtenu directement après décantation de l'effluent (circulaire ou lamellaire),
- de boues biologiques provenant de bassins de traitement des effluents par boues activées,
- de boues épaissies (obtenues après décantation),
- de boues digérées c'est-à-dire stabilisées en anaérobie,
- de boues stabilisée par voie aérobie,
- de boues stabilisées par addition de chaux,
- de boues mixtes (mélange de boues biologiques et de boues primaires),

ou encore de mélanges de telles boues.

Selon une variante de mise en oeuvre, le procédé selon l'invention peut être appliqué aux boues ellesmêmes. Les boues sont filtrées, généralement après stabilisation ou un autre traitement. On obtient des boues déshydratées et un filtrat caractérisé par une forte concentration en ammoniaque. Dans le cas courant, ces filtrats sont recyclés en tête de la station de traitement des eaux. Cela conduit à accroître la charge en azote sur l'installation de traitement des eaux. L'invention préconise de traiter séparément ce filtrat en réalisant une nitrification suivie d'une dénitrification avec ajout d'une source carbonée exogène. Au lieu de le faire avec une source carbonée exogène chère, l'invention se propose de recourir aux boues présentes. Compte-tenu des normes de rejet devant être respectées à l'égard des composés ammoniaqués et des concentrations élevées en ammoniaque contenues dans le liquide interstitiel des boues, il est apparu judicieux d'utiliser des boues déshydratées soit par le moyen principal, soit en dérivant une partie des boues vers un moyen de déshydratation spécifique à la production des boues servant de source carbonée exogène à la dénitrification.

C'est la raison pour laquelle le procédé selon l'invention comprend préférentiellement une étape visant à séparer au moins une partie de l'azote ammoniacal des boues avant des les utiliser lors de l'étape de dénitrification en tant que source carbonée.

Selon une variante de l'invention, une telle étape peut être effectuée en centrifugeant lesdites boues.

Selon une autre variante, cette étape est effectuée en filtrant les boues.

Selon une variante de l'invention, ladite étape de filtration est effectuée sur au moins un filtre à bandes.

Selon une autre variante de l'invention, ladite étape de filtration est effectuée sur au moins un filtre-presse.

Ainsi, les boues utilisées dans le cadre du procédé selon l'invention pourront également être des boues déshydratées ou des boues centrifugées. De telles boues pourront être utilisées seules ou en mélange avec des boues primaires des boues biologiques, des boues mixtes ou des boues digérées.

Avantageusement, le procédé inclut de plus une étape consistant à faire subir audit effluent une déphosphatation, concomitamment à ladite dénitrification. Une telle déphosphatation peu être réalisée par voie physico-chimique par addition de réactifs (chaux, sels de fer ou aluminium) permettant aux phosphates de floculer en passant de leur forme soluble à leur forme insoluble pour pouvoir ensuite les récupérer par décantation. Cette déphosphatation peu également être réalisée par voie biologique grâce à des bactéries hétérotrophes, en faisant passer les effluents stockés en anaérobie dans un bassin de dénitrification aérobie en présence de nitrates, les bactéries hétérotrophes utilise l'oxygène des nitrates pour déphosphater l'effluent traité.

D'une façon particulièrement intéressante, le procédé selon l'invention peut être utilisé pour traiter les filtrats des boues provenant d'une ou plusieurs stations d'épuration. L'invention concerne donc également un procédé de traitement de boues caractérisé en ce qu'il consiste à :
- séparer au moins une partie desdites boues afin d'obtenir d'une part une phase liquide et d'autre part une phase boues et,
- à faire subir à ladite phase liquide un traitement selon le procédé décrit ci-dessus, lesdites boues ajoutées lors de l'étape de dénitrification étant constituées, au moins en partie, par un prélèvement dans lesdites boues à traiter.

Avantageusement, lesdites boues ajoutées comprennent également au moins une partie de ladite phase boues obtenue lors de la séparation.

Préférentiellement, ledit prélèvement est effectué dans le groupe constitué par les boues primaires, les boues biologiques, les boues épaissies, les boues digérées, les boues stabilisées, les boues centrifugées, les boues déshydratées ou par un mélange de telles boues.

L'invention concerne également une installation pour la mise en oeuvre d'un tel procédé de traitement de boues, ladite installation étant caractérisée en ce qu'elle comprend :
- au moins une unité de stockage anaérobie desdites boues;
- au moins une unité de filtration permettant de filtrer au moins une partie desdites boues provenant de ladite unité de stockage et d'obtenir d'une part des boues déshydratées et d'autre part un filtrat ;
- au moins un réacteur de nitrification biologique dudit filtrat;
- au moins un réacteur de dénitrification biologique dudit filtrat à sa sortie de ladite unité de nitrification biologique ;
- des moyens permettant d'acheminer une partie desdites boues provenant directement de ladite unité de stockage et desdites boues déshydratées dans ledit réacteur de dénitrification biologique.

Préférentiellement ladite installation inclut de plus au moins une unité de séparation permettant de séparer une partie desdites boues provenant de ladite unité de stockage et des moyens d'acheminement d'au moins une partie desdites boues séparées dans ledit réacteur de dénitrification biologique. Une telle unité de séparation peut, par exemple, être constituée par une unité de centrifugation.

Egalement préférentiellement, ladite unité de stockage est une unité anaérobie permettant la déphosphatation dudit filtrat lors de son passage dans le dénitrificateur biologique.

Egalement avantageusement, l'installation inclut une unité de séparation complémentaire de la boue de l'effluent à traiter.

Avantageusement, ladite unité de séparation de la boue de l'effluent à traiter peut être utilisée pour déphosphater le filtrat si on y a introduit au préalable un réactif tel que notamment un sel de fer ou d'aluminium, de la chaux...

L'invention concerne enfin une installation comprenant au moins une unité de traitement d'une eau nitratée incluant des moyens non biologiques de rétention (résines échangeuses d'ions, membranes d'osmose inverse...) des nitrates contenus dans lesdites eaux couplée à au moins une unité de traitement biologique permettant de décomposer les nitrates présents dans les éluats ou les concentrats formés grâce auxdits moyens non biologiques, caractérisée en ce qu'elle comprend des moyens d'amenée de boues provenant de stations d'épuration dans ladite unité de traitement biologique.

L'invention, ainsi que les différents avantages qu'elle présente seront plus facilement compris grâce à la description de trois exemples de réalisation qui va suivre en référence aux dessins dans lesquels :

- les figures 1a et 1b sont des représentation schématique d'installations pour la mise en oeuvre du procédé selon l'invention, dans le cadre du traitement de filtrats de boues provenant de plusieurs stations d'épuration.
- la figure 2 représente les courbes traduisant la cinétique de dénitrification d'un milieu traité grâce au procédé selon l'invention.
- la figure 3 traduit l'élimination des nitrates d'un autre milieu traité grâce au procédé selon l'invention.

Exemple 1

Le premier exemple de mise en oeuvre du procédé selon l'invention concerne le traitement de filtrats de boues provenant de plusieurs stations d'épuration.

Classiquement, les filtrats obtenus lors de la déshydratation des boues sont retournés en tête de l'installation de traitement d'eau pour y être traités conjointement. Dans le cadre de cet exemple, seul le traitement des boues existe sur le site. De plus, compte-tenu de la caractéristique des ces filtrats (DCO/N-N0$_3$ faible) il est nécessaire d'apporter une source carbonée complémentaire pour permettre leur dénitrification. Les filtrats, nitrifiés au préalable, doivent être dénitrifiés avec une source de carbone exogène. L'invention propose de remplacer l'utilisation de sources carbonées telles que le méthanol par une source carbonée moins chère constituée par une partie des boues présentes sur le site.

Selon cet exemple, l'installation représentée schématiquement à la figure la est destinée à traiter en moyenne 1000 m$^3$ de boues par jour provenant de plusieurs stations d'épuration, soit un tonnage de 11 000 tonnes de boues par an. Ces boues ont pour la plupart subit une digestion préalable.

L'installation comprend une unité de stockage 1 des boues provenant de différentes stations d'épuration, une unité de filtration 2 incluant une série de filtres-presses, une unité de centrifugation 3, un réacteur de nitrification biologique 4, une unité de décantation 5, un réacteur de dénitrification biologique 6 et un épaississeur 7.

Une partie des boues stockées dans l'unité de stockage 1 est dirigée vers une série de filtres-presses 2 en vue d'obtenir d'une part un filtrat renfermant l'essentiel de la pollution azotée desdites boues et d'autre part des boues déshydratées.

Une autre partie de ces boues est dirigée vers l'unité de centrifugation 3 afin d'obtenir des boues centrifugées et un surnageant renfermant l'essentiel de l'azote ammoniacal de ces boues.

Le filtrat récupéré à la sortie des filtres-presses 2 et le surnageant récupéré à la sortie de l'unité de centrifugation 3 sont acheminés vers le réacteur de nitrification biologique 4 où une flore bactérienne travaillant en milieu aérobie réduit l'azote ammoniacal présent dans cet effluent aqueux en nitrates. Ce filtrat présente les caractéristiques suivantes :

Charge moyenne (Qmoyen) : 900 m$^3$
Charge maximale (Qmax) : 1 000 m$^3$
DCO totale : 650 mg/l
DBO totale : 110 mg/l
Azote ammoniacal : 800 mg/l
Matières en suspension: 180 mg/l

L'effluent est ensuite dirigé vers l'unité de décantation 5 (on pourra également utilisé une unité de flottation) avant de subir une étape de dénitrification biologique dans le réacteur de dénitrification 6 dans laquelle une flore bactérienne permet de réduire les nitrates de l'effluent en nitrites puis en azote gazeux.

On notera que les boues produites par la décantation ou la flottation sont recyclées dans le réacteur de nitrification.

Avant d'entrer dans le réacteur de dénitrification biologique 6 , différentes boues provenant de l'unité de stockage 1, de l'unité de centrifugation 3 et des boues déshydratées provenant des filtres-presses 2 sont ajoutées à l'effluent sortant de l'unité de décantation 5, à raison d'un ratio MES/N.NO$^3$ au moins égal à 10, afin de suppléer en carbone les filtrats provenant de ces boues. L'ajout de boues centrifugées et déshydratées permet de minimiser la réintroduction d'une pollution azotée dans l'effluent à dénitrifier, azote pouvant être apportée par le liquide interstitiel des boues provenant directement de l'unité de stockage 1.

L'effluent dénitrifié subit ensuite une séparation dans l'épaississeur 7, les boues issues de cette séparation étant renvoyées vers l'unité de stockage des boues 1 ou vers le réacteur de dénitrification 6.

Le procédé selon l'invention a permis d'obtenir un filtrat traité répondant pleinement aux normes de rejet suivantes :

DCO totale : 125 mg/l
DBO totale : 40 mg/l
Azote ammoniacal : 20 mg/l
Matières en suspension : 40 mg/l
Nitrates : 10 à 30 mg/l

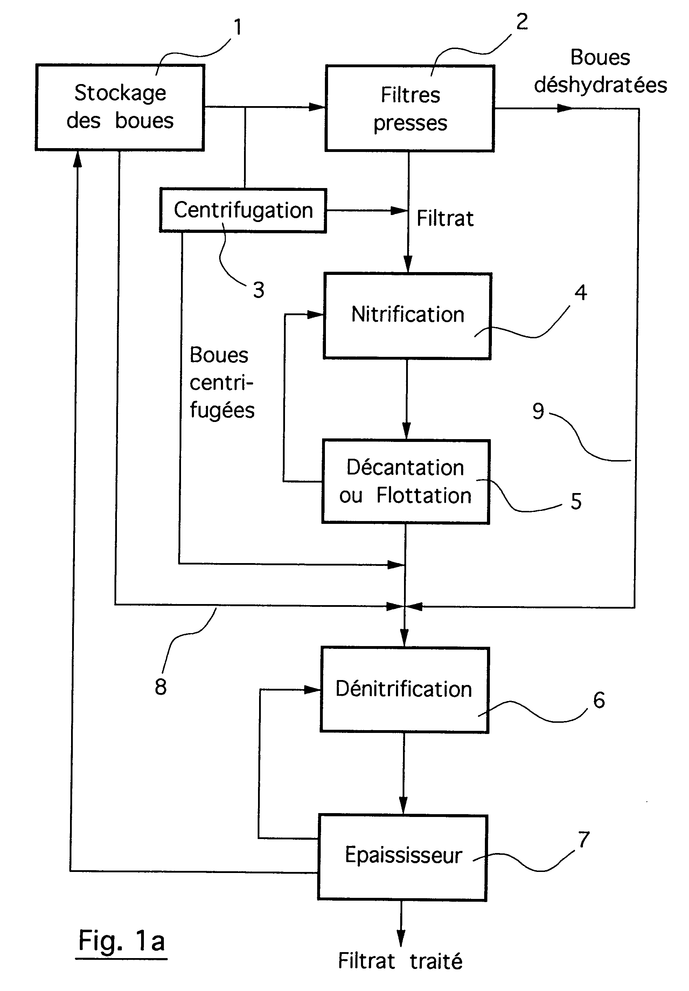

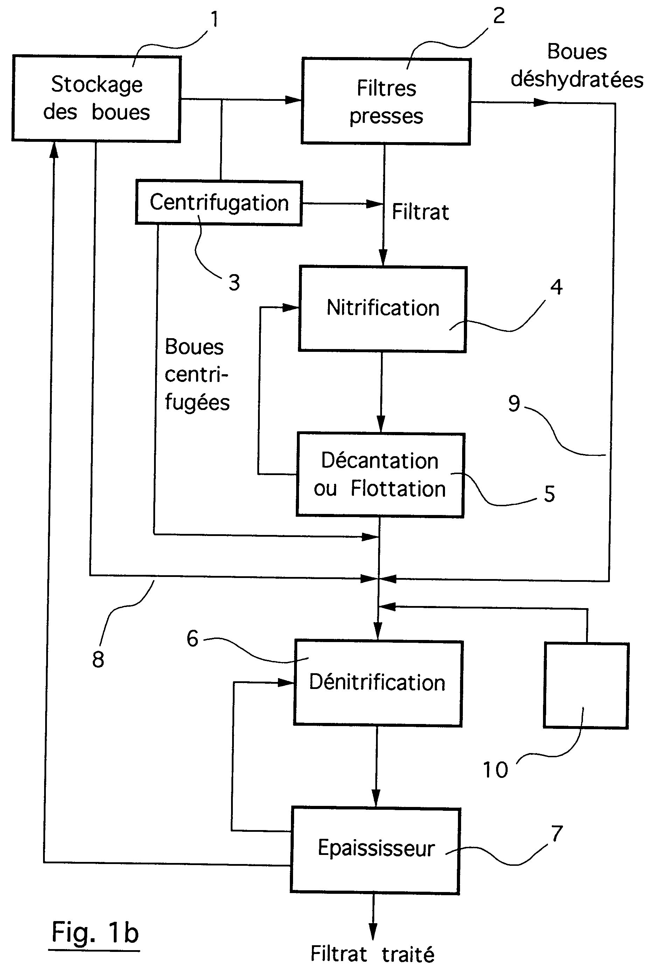

La figure 1b montre une installation identique à l'installation représentée à la figure la mais dans laquelle des moyens 10 sont prévus pour procéder à l'ajout d'un réactif de déphosphatation immédiatement en aval de l'unité de dénitrification.

### Exemple 2

Le deuxième exemple de mise en oeuvre du procédé selon l'invention concerne la dénitrification biologique des éluats de régénération des résines échangeuses d'ions utilisées en production d'eau potable.

La potabilisation d'une eau chargée en ions nitrates nécessite la mise en oeuvre de procédés de dénitrification. Parmi les procédés physico-chimiques disponibles, la technique d'échanges d'ions est la plus répandue dans le milieu rural du fait de ses avantages économiques et de sa simplicité de mise en oeuvre. Cette technique consiste à faire percoler l'eau à traiter sur un lit de résines anioniques fortes. Les ions nitrates et sulfates se fixent sur la résine et sont remplacés stoechiométriquement dans l'eau par des ions chlorures (ou bicarbonates). Lorsque la résine est saturée, l'élution des ions nitrates et sulfates s'opère par le chlorure de sodium qui les déplace sous forme de sulfates et de nitrates de sodium. Les éluats récupérés sont donc très chargés en nitrates.

Selon le présent exemple, des saumures constituées de tels éluats sont traitées grâce au procédé selon l'invention. Ces saumures présentent les caractéristiques suivantes :
- $NO_3$ : 6,5 g/l
- $SO_4$ : 2,7 g/l
- $HCO_3$ : 1,6 g/l
- Nacl : 21g/l

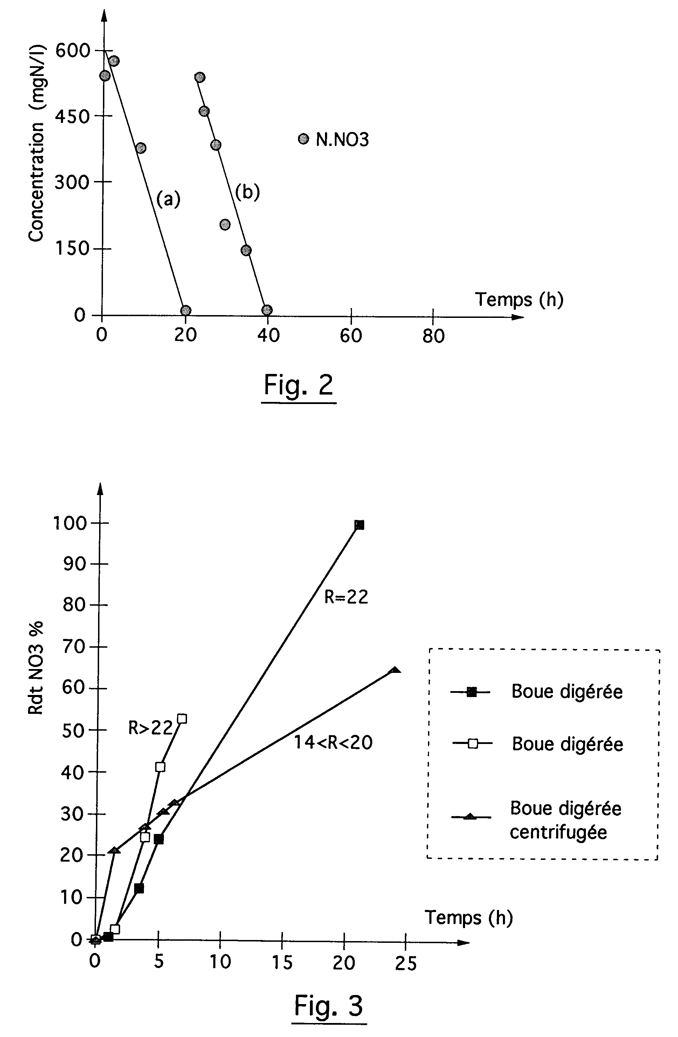

Ces saumures sont traitées par voie biologique grâce à un inoculum de bactéries dénitrifiantes adaptées aux fortes concentrations salines. Des boues provenant d'une station d'épuration d'eaux usées par boues activées sont ajoutées au milieu lors de l'étape de dénitrification afin de servir de substrat carboné à raison de 2 litres de boues pour 2 litres de saumure soit un ration boues/$N.NO_3$ de 17,5 kg/kg. Après une première cinétique, le liquide dénitrifié est vidangé et l'on procède à un rajout de saumures fraîches. Les résultats de dénitrification sont obtenus à la figure 2 dans laquelle la première courbe (a) traduit la cinétique de dénitrification de la première quantité de saumures et la deuxième courbe (b) correspond à la cinétique de la deuxième quantité de saumures. Selon ces courbes, on peut constater que le premier lot de saumures a été complètement débarrassé de ses nitrates en un peu moins de 20 heures et le second lot en 20 heures.

### Exemple 3

Ce troisième exemple concerne le traitement d'une eau industrielle chargée en nitrates à raison de 300 à 600 mg/l.

Cette eau a été traitée dans un réacteur de dénitrification biologique en amenant au niveau de ce réacteur tantôt des boues digérées, tantôt des boues digérées centrifugées provenant de stations d'épuration. Les essais ont été effectués avec différents ratio MES/$N.NO_3$ (ratio "R"). Les résultats obtenus sont représentés à la figure 3. Selon cette figure, on peut constater qu'un tel ratio permet d'obtenir une élimination totale des nitrates de l'effluent pour un ratio R égal à 22 en un peu plus de 20 heures.

Les différents exemples de réalisation de l'invention ici décrits n'ont pas pour objet de réduire la portée de celle-ci. Il pourra notamment être envisagé d'utiliser un ration MES/$N.NO_3$ différent de celui indiqué dans les exemples dès lors qu'il sera au moins égal à 10.

### Revendications

1. Procédé de traitement d'un effluent aqueux incluant une étape de dénitrification biologique consistant à mettre en contact ledit effluent avec une flore bactérienne hétérotrophe en milieu non aéré de façon à permettre la réduction d'au moins une partie des nitrates contenus dans cet effluent en azote gazeux, caractérisé en ce qu'il consiste à mettre en contact, lors de l'étape de dénitrification, ledit effluent chargé en nitrates avec des boues provenant de station d'épuration, de façon telle que le ratio spécifique entre la teneur pondérale de matières en suspension desdites boues et la teneur pondérale dudit effluent en nitrates soit au moins égal à 10.

2. Procédé selon la revendication 1 caractérisé en ce qu'il comprend une étape préalable de nitrification.

3. Procédé selon l'une des revendications 1 ou 2 caractérisé en ce qu'il comprend une étape préliminaire consistant à séparer au moins une partie de l'azote ammoniacal contenu dans l'eau interstitielle desdites boues de station d'épuration avant des les utiliser lors de l'étape de dénitrification.

4. Procédé selon la revendication 3 caractérisé en ce que ladite étape préalable de séparation d'au moins une partie de l'azote ammoniacal desdites boues est effectuée en centrifugeant lesdites boues.

5. Procédé selon la revendication 3 caractérisé en ce que ladite étape préalable de séparation d'au moins une partie de l'azote ammoniacal desdites boues est effectuée en filtrant lesdites boues.

6. Procédé selon la revendication 5 caractérisé en ce que ladite étape de filtration est effectuée sur au moins un filtre à bandes.

7. Procédé selon la revendication 5 caractérisé en ce que ladite étape de filtration est effectuée sur au moins un filtre-presse.

8. Procédé selon l'une des revendications 1 à 7 caractérisé en ce que lesdites boues de station d'épuration sont choisies dans le groupe constitué par les boues primaires, les boues biologiques, les boues épaissies, les boues digérées, les boues stabilisées, les boues centrifugées, les boues déshydratées ou par un mélange de telles boues.

9. Procédé selon l'une des revendication 1 à 8 caractérisé en ce qu'il inclut de plus une étape consistant à faire subir audit effluent une déphosphatation, concomitamment à ladite dénitrification.

10. Procédé de traitement de boues caractérisé en ce qu'il consiste à :
   - séparer au moins une partie desdites boues à traiter afin d'obtenir d'une part une phase liquide et d'autre part une phase boues et,
   - à faire subir à ladite phase liquide un traitement selon le procédé selon les revendications 1 à 9,
   lesdites boues ajoutées lors de l'étape de dénitrification étant constituées, au moins en partie, par un prélèvement dans lesdites boues à traiter.

11. Procédé selon la revendication 10 caractérisé en lesdites boues ajoutées comprennent également au moins une partie de ladite phase boues obtenue lors de la séparation.

12. Procédé selon la revendication 10 ou 11 caractérisé en ce que ledit prélèvement est effectué dans le groupe constitué par les boues primaires, les boues biologiques, les boues épaissies, les boues digérées, les boues stabilisées, les boues centrifugées, les boues déshydratées ou par un mélange de telles boues.

13. Installation pour la mise en oeuvre du procédé selon l'une des revendication 11 ou 12 caractérisée en ce qu'elle comprend :
   - au moins une unité de stockage (1) desdites boues ;
   - au moins une unité de filtration (2) permettant de filtrer au moins une partie desdites boues provenant de ladite unité de stockage (1) et d'obtenir d'une part des boues déshydratées et d'autre part un filtrat ;
   - au moins un réacteur de nitrification biologique (4) dudit filtrat ;
   - au moins un réacteur de dénitrification biologique (6) du filtrat à sa sortie de ladite unité de nitrification biologique (4) ;
   - des moyens (8,9) permettant d'acheminer une partie desdites boues provenant directement de ladite unité de stockage (1) et desdites boues déshydratées dans ledit réacteur de dénitrification biologique (4).

14. Installation selon la revendication 13 caractérisée en ce qu'elle inclut de plus au moins une unité de séparation (3) permettant de séparer une partie desdites boues provenant de ladite unité de stockage et des moyens d'acheminement (10) d'au moins une partie desdites boues séparées dans ledit réacteur de dénitrification biologique.

15. Installation selon l'une des revendications 13 ou 14 caractérisé en ce que ladite unité de stockage (1) est une unité anaérobie permettant la déphosphatation dudit filtrat lors de son passage dans le réacteur de dénitrification biologique.

16. Installation selon l'une des revendication 13 à 15 caractérisée en ce qu'elle inclut de plus une unité de séparation complémentaire (5) de la boue de l'effluent à traiter.

17. Installation pour la mise en oeuvre du procédé selon l'une des revendications 1 à 9 comprenant au moins une unité de traitement d'une eau nitratée incluant des moyens non biologiques de rétention des nitrates contenus dans lesdites eaux couplée à au moins une unité de traitement biologique permettant de décomposer les nitrates présents dans les éluats ou les concentrats formés grâce auxdits moyens non biologiques, caractérisée en ce qu'elle comprend des moyens d'amenée de boues provenant de stations d'épuration dans ladite unité de traitement biologique.

Fig. 1a

Fig. 1b

Fig. 2

Fig. 3

Office européen
des brevets

**RAPPORT DE RECHERCHE EUROPEENNE**

Numero de la demande

EP 94 46 0024

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | PATENT ABSTRACTS OF JAPAN vol. 16, no. 1 (C-899) (5044) 7 Janvier 1992 & JP-A-03 229 693 (NGK INSULATORS LTD.) 11 Octobre 1991 * abrégé * | 1,2,8,17 | C02F3/30 |
| X | DE-A-31 17 805 (BÖHNKE, BOTHO) * page 5, alinéa 5 - page 6; figure * | 1,2,8,17 | |
| X | GWF WASSER ABWASSER, vol.134, no.1, Janvier 1993, MUNCHEN DE pages 77 - 79 BERNHARD MORAWE 'NUTZUNG VON ADSORBIERTEM KOHLENSTOFF ZUR BIOLOGISCHEN STICKSTOFFELIMINATION AUS ABWÄSSERN' * page 78, colonne de gauche, alinéa 2 - colonne de droite, alinéa 2; figures 2,4 * | 1,2,8,17 | |
| A | DE-A-31 50 140 (LINDE A.G.) * page 1; revendications 1-6,8,9; figure * * page 4, ligne 20 - page 5, ligne 24 * * page 7, ligne 16 - page 8, ligne 24 * * page 9, ligne 12 - page 10, ligne 30 * | 1,3,8,17 | **DOMAINES TECHNIQUES RECHERCHES (Int.Cl.6)** C02F |
| A | FR-A-1 585 712 (SOCIETE GENERALE D'EPURATION ET D'ASSAINISSEMENT) * page 3, ligne 3 - page 4, ligne 40; figures * | 10,13 | |

Le présent rapport a été établi pour toutes les revendications

| Lieu de la recherche | Date d'achèvement de la recherche | Examinateur |
|---|---|---|
| LA HAYE | 30 Septembre 1994 | Teply, J |

EPO FORM 1503 03.82 (P04C02)